(19)

**Europäisches Patentamt**
**European Patent Office**
**Office européen des brevets**

(11) **EP 4 183 056 B1**

(12) **EUROPEAN PATENT SPECIFICATION**

(45) Date of publication and mention
of the grant of the patent:
**24.09.2025 Bulletin 2025/39**

(21) Application number: **20757746.1**

(22) Date of filing: **30.07.2020**

(51) International Patent Classification (IPC):
*H04B 7/06* (2006.01)    *H04B 17/12* (2015.01)
*H04B 7/08* (2006.01)    *H04L 5/00* (2006.01)

(52) Cooperative Patent Classification (CPC):
**H04L 5/0025; H04B 7/06966; H04B 7/088;**
H04B 17/102; Y02D 30/70

(86) International application number:
**PCT/US2020/044348**

(87) International publication number:
**WO 2020/206472 (08.10.2020 Gazette 2020/41)**

(54) **METHOD AND APPARATUS FOR INTER-BAND DL/UL BEAM CORRESPONDENCE TESTING**

VERFAHREN UND VORRICHTUNG ZUR INTERBAND-DL/
UL-STRAHLKORRESPONDENZPRÜFUNG

PROCÉDÉ ET APPAREIL DE TEST DE CORRESPONDANCE DE FAISCEAUX INTER-BANDE DL/
UL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**24.05.2023 Bulletin 2023/21**

(73) Proprietor: **Huawei Technologies Co., Ltd.**
**Shenzhen, Guangdong 518129 (CN)**

(72) Inventors:
• **CHENG, Qian**
**Naperville, Illinois 60565 (US)**
• **CHEN, Xiang**
**Santa Clara, California 95054 (US)**

(74) Representative: **MERH-IP Matias Erny Reichl**
**Hoffmann**
**Patentanwälte PartG mbB**
**Paul-Heyse-Straße 29**
**80336 München (DE)**

(56) References cited:
• SAMSUNG: "Considerations on FR2 beam
correspondence tolerance", vol. RAN WG5, no.
Ljubljana, Slovenia; 20190826 - 20190830, 16
August 2019 (2019-08-16), XP051774242,
Retrieved from the Internet <URL:http://
www.3gpp.org/ftp/tsg_ran/WG5_Test_ex-T1/
TSGR5_84_Ljubljana/Docs/R5-196071.zip>
[retrieved on 20190816]
• INTEL CORPORATION: "On beam
Correspondence test procedure", vol. RAN WG4,
no. Athens, Greece; 20190225 - 20190301, 15
February 2019 (2019-02-15), XP051604968,
Retrieved from the Internet <URL:http://
www.3gpp.org/ftp/tsg%5Fran/WG4%5FRadio/
TSGR4%5F90/Docs/R4%2D1900133%2Ezip>
[retrieved on 20190215]
• LG ELECTRONICS: "Initial discussion on test
procedure for beam correspondence in FR2",
vol. RAN WG4, no. Athens, Greece; 20190225 -
20190301, 15 February 2019 (2019-02-15),
XP051605439, Retrieved from the Internet
<URL:http://www.3gpp.org/ftp/tsg%5Fran/WG4%
5FRadio/TSGR4%5F90/Docs/R4%2D1900715%
2Ezip> [retrieved on 20190215]

**Description**

**TECHNICAL FIELD**

The present disclosure relates generally to wireless communications, and, in particular embodiments, to a method and apparatus for inter-band downlink (DL)/uplink (UL) beam correspondence testing.

**BACKGROUND**

In next-generation wireless communications, e.g., 5G new radio (NR), high frequency carriers, such as millimeter wave (mmWave) carriers, are used to provide high data rate wireless communications. Beamforming techniques are employed to combat the path loss suffered from communications using high frequencies, where a number of high-gain transmit and/or receive beams are formed in different angular directions, and possibly at different time slots, for transmitting and receiving wireless signals. Beam management procedures are also defined and used to manage beamforming processes.

3GPP Draft R5-196071 discloses a test procedure for beam correspondence, comprising: SS configuring M SRS resources to DUT, with the field *spatialRelationInfo* omitted; Based on the TX beam autonomously selected by DUT, DUT choosing TX beams to transmit SRS-resources configured by SS; and Based on measurement of the received SRS, SS choosing the best SRS beam which is indicated in the field of SRS Resource Indicator (SRI) in the scheduling grant for PUSCH, wherein the TX beam peak direction is where the maximum total component of EIRP($Pol_{Link}=\theta$) or EIRP($Pol_{Link}=\theta$) is found.

3GPP Draft R4-1900133 and R4-1900715 discuss beam Correspondence test procedure.

SUMMARY

Technical advantages are generally achieved, by embodiments of this disclosure which describe a method and apparatus for inter-band downlink (DL)/uplink (UL) beam correspondence testing.

According to one aspect of the present disclosure, there is provided a method that includes: transmitting, by a device, a first signal in a first frequency band over a first transmit beam to a user equipment (UE); receiving, by the device, a plurality of signals from the UE in a second frequency band that is higher than the first frequency band, the plurality of signals transmitted by the UE over a plurality of UE transmit beams in the second frequency band; measuring effective isotropic radiation powers (EIRPs) of the plurality of signals; determining, based on the measured EIRPs, that a second signal from the plurality of signals has a measured EIRP satisfying a predefined criterion, the second signal being transmitted by the UE over a second transmit beam of the plurality of UE transmit beams; and determining that the UE supports inter-band beam correspondence between the first frequency band and the second frequency band, upon the second transmit beam satisfying a minimum peak EIRP requirement and a spherical coverage requirement in the second frequency band.

This enables to determine whether the UE supports inter-band beam correspondence between different frequency bands, and provides a mechanism for ensuring the UE's capability of inter-band beam correspondence between different frequency bands.

Optionally, in any of the preceding aspects, a quantity of the plurality of UE transmit beams is related to the first frequency band and the second frequency band.

Optionally, in any of the preceding aspects, the quantity is based on a predefined mapping between the first frequency band and the second frequency band.

Optionally, in any of the preceding aspects, the quantity is based on a formula relating to the first frequency band and the second frequency band.

Optionally, in any of the preceding aspects, the quantity satisfies:

$$K_{bc} = \alpha \cdot \max\left\{\left[\frac{F2\_low}{F1\_low}\right]^2, \left[\frac{F2\_high}{F1\_high}\right]^2\right\},$$

where $K_{bc}$ is the quantity of the plurality of UE transmit beams, F1_low represents a lowest frequency of the first frequency band, F2_low represents a lowest frequency of the second frequency band, F1_high represents a highest frequency of the first frequency band, F2_high represents a highest frequency of the second frequency band, and $\alpha$ is a constant.

Optionally, in any of the preceding aspects, the quantity satisfies:

$$K_{bc} = \alpha \cdot \left\lceil \frac{F2\_high}{F1\_low} \right\rceil^2,$$

where $K_{bc}$ is the quantity of the plurality of UE transmit beams, F1_high represents the highest frequency of the first frequency band, F2_high represents the highest frequency of the second frequency band, and $\alpha$ is a constant.

Optionally, in any of the preceding aspects, the first frequency band and the second frequency band have a frequency difference that is greater than a threshold.

Optionally, in any of the preceding aspects, the EIRP of the second signal satisfying the predefined criterion comprises: the EIRP of the second signal is maximal among EIRP of the plurality of signals.

Optionally, in any of the preceding aspects, the method further comprises: generating, by the device, a report indicating that the UE requires calibration for inter-band beam correspondence upon the second transmit beam failing to satisfy the minimum peak EIRP requirement or the spherical coverage requirement in the second frequency band.

Optionally, in any of the preceding aspects, the method further comprises: generating, by the device, a report indicating that the UE passes a test for inter-band beam correspondence upon the first UE transmit beam satisfying the minimum peak EIRP requirement and the spherical coverage requirement in the second frequency band.

According to another aspect of the present disclosure, there is provided a method that includes: transmitting, by a device to a user equipment (UE), a plurality of reference signals (RSs) in a first frequency band; receiving, by the device, a first report from the UE, the first report comprising measurements of the first plurality of RSs performed by the UE; configuring, by the device, a transmission of a second RS in a second frequency band based on the first report, the second RS being quasi-colocated (QCLed) with a first RS of the plurality of RSs in the first frequency band according to QCL Type-D, the first RS corresponding to a resource indicator that is included in the first report, and the second frequency band being higher than the first frequency band; transmitting, by the device, the second RS in the second frequency band to the UE; configuring, by the device for the UE, a transmission of uplink sounding reference signals (SRSs) in the second frequency band, the SRSs in spatial relation with the second RS; receiving, by the device, the uplink SRSs from the UE in the second frequency band; and determining, by the device, that the UE supports inter-band beam correspondence between the first frequency band and the second frequency band, upon a beam that carries a SRS of the received uplink SRSs satisfying a minimum peak EIRP requirement or a spherical coverage requirement in the second frequency band, the SRS having effective isotropic radiation power (EIRP) satisfying a predefined criterion.

This enables to determine whether the UE supports inter-band beam correspondence between different frequency bands, and provides a mechanism for ensuring the UE's capability of inter-band beam correspondence between different frequency bands.

Optionally, in any of the preceding aspects, the plurality of RSs comprises a synchronization signal block (SSB).

Optionally, in any of the preceding aspects, the plurality of RSs comprises a channel state information-reference signal (CSI-RS).

Optionally, in any of the preceding aspects, the first frequency band and the second frequency band have a frequency difference that is greater than a threshold.

Optionally, in any of the preceding aspects, the first report comprises a layer 1 received signal received power (L1-RSRP) or layer 1 signal to noise plus interference ration (L-1 SINR).

Optionally, in any of the preceding aspects, the first report comprises a CSI-RS resource indicator (CRI) and/or SSB resource indicator (SSBRI).

Optionally, in any of the preceding aspects, the second RS comprises a CSI-RS.

Optionally, in any of the preceding aspects, the method further comprises: configuring, by the device, a number of transmissions of the CSI-RS, the number less than a threshold.

Optionally, in any of the preceding aspects, the method further comprises: generating, by the device, a report indicating that the UE requires calibration for supporting inter-band beam correspondence upon beam failing to satisfy the minimum peak EIRP requirement or the spherical coverage requirement in the second frequency band.

Optionally, in any of the preceding aspects, the method further comprises: generating, by the device, a report indicating that the UE passes a calibration test for supporting inter-band beam correspondence upon the beam satisfying the minimum peak EIRP requirement and the spherical coverage requirement in the second frequency band.

According to another aspect of the present disclosure, an apparatus is provided that includes: a non-transitory memory storage comprising instructions; and one or more processors in communication with the memory storage, wherein the instructions, when executed by the one or more processors, cause the apparatus to perform a method in any of the preceding aspects.

According to another aspect of the present disclosure, a non-transitory computer-readable media is provided. The non-transitory computer-readable media stores computer instructions, that when executed by one or more processors, cause an apparatus to perform a method in any of the preceding aspects.

BRIEF DESCRIPTION OF THE DRAWINGS

For a more complete understanding of the present disclosure, and the advantages thereof, reference is now made to the following descriptions taken in conjunction with the accompanying drawings, in which:

FIG. 1 illustrates a diagram of an embodiment communication network;
FIG. 2 illustrates a diagram of an embodiment arrangement for testing a UE's capability of supporting inter-band beam correspondence;
FIG. 3 illustrates a diagram of an embodiment method for testing a UE's capability of supporting inter-band beam correspondence;
FIG. 4 illustrates a diagram of another embodiment method for testing a UE's capability of supporting inter-band beam correspondence;
FIG. 5 illustrates a flowchart of an embodiment method for testing a UE's capability of supporting inter-band beam correspondence;
FIG. 6 illustrates a flowchart of another embodiment method for testing a UE's capability of supporting inter-band beam correspondence;
FIG. 7 illustrates a block diagram of an embodiment processing system; and
FIG. 8 illustrates a block diagram of an embodiment transceiver adapted to transmit and receive signaling over a telecommunications network.

Corresponding numerals and symbols in the different figures generally refer to corresponding parts unless otherwise indicated. The figures are drawn to clearly illustrate the relevant aspects of the embodiments and are not necessarily drawn to scale.

## DETAILED DESCRIPTION OF ILLUSTRATIVE EMBODIMENTS

The making and using of embodiments of this disclosure are discussed in detail below. It should be appreciated, however, that the concepts disclosed herein can be embodied in a wide variety of specific contexts, and that the specific embodiments discussed herein are merely illustrative and do not serve to limit the scope of the claims. Further, it should be understood that various changes, substitutions and alterations can be made herein without departing from the scope of this disclosure as defined by the appended claims.

A user equipment (UE) may be configured to communicate in multiple frequency bands, where beamforming techniques are used for communication in the multiple frequency bands. The UE may be able to determine beam related information for one frequency band based on beam information of another frequency band according to the UE's capability of supporting inter-band beam correspondence between the two frequency bands. This is beneficial for facilitating the UE's beam management, such as beam link pairing, especially when an involved frequency band is high, e.g., in millimeter wave frequency band. It is thus desirable to ensure that UEs support inter-band beam correspondence before the UEs get out of the factory.

Embodiment of the present disclosure provide methods for testing whether a UE supports inter-band beam correspondence between a first frequency band and a second frequency band, where the second frequency band is higher than the first frequency band. A UE supports inter-band beam correspondence if the UE is able to determine one or more UE transmit (Tx) beams for uplink transmission in the second frequency band based on the UE's measurement on signals received in the first frequency band, such that a UE Tx beam in the second frequency band satisfies a beam correspondence requirement in the second frequency band. Details of embodiments will be provided in the following.

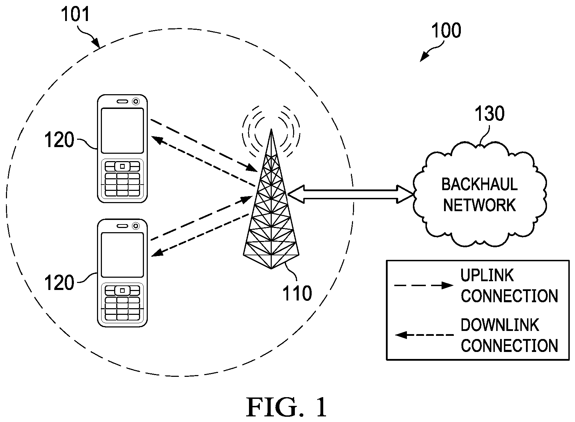

FIG. 1 illustrates a network 100 for communicating data. The network 100 comprises a base station 110 having a coverage area 101, a plurality of user equipments (UEs) 120, and a backhaul network 130. As shown, the base station 110 establishes uplink (dashed line) and/or downlink (dotted line) connections with the UEs 120, which serve to carry data from the UEs 120 to the base station 110 and vice-versa. Data carried over the uplink/downlink connections may include data communicated between the UEs 120, as well as data communicated to/from a remote-end (not shown) by way of the backhaul network 130. As used herein, the term "base station" refers to any component (or collection of components) configured to provide wireless access to a network, such as a Node B, an evolved Node B (eNB), a next generation (NG) Node B (gNB), a master eNB (MeNB), a secondary eNB (SeNB), a master gNB (MgNB), a secondary gNB (SgNB), a network controller, a control node, an access node, an access point, a transmission point (TP), a transmission-reception point (TRP), a cell, a carrier, a macro cell, a femtocell, a pico cell, a relay, a customer premises equipment (CPE), a WI-FI access point (AP), or other wirelessly enabled devices. Base stations may provide wireless access in accordance with one or more wireless communication protocols, e.g., long term evolution (LTE), LTE advanced (LTE-A), High Speed Packet Access (HSPA), WI-FI 802.11a/b/g/n/ac, etc. As used herein, the term "user equipment" refers to any component (or collection of components) capable of establishing a wireless connection with a base station. UEs may also be commonly referred to as mobile stations, mobile devices, mobiles, terminals, users, subscribers, stations, communication devices, CPEs, relays, Integrated Access and Backhaul (IAB) relays, and the like. It is noted that when relaying is used (based on relays, picos, CPEs, and so on), especially multi-hop relaying, the boundary between a controller and a node controlled by the controller may become blurry, and a dual node (e.g., either the controller or the node controlled by the controller) deployment where a first node that provides configuration or control information to a second node is considered to be the controller. Likewise, the concept of UL and DL transmissions can be extended as well. In some embodiments, the network 100 may comprise various other wireless devices, such as relays, low power nodes, etc.

The network 100 may provide wireless communications over a single carrier, or over an aggregation of different component carriers (i.e., carrier aggregation). The different component carriers may be in different bands or in the same bands. The network 100 may be configured to operate in one or more frequency bands, such as sub-6 GHz band, e.g., spanning 450 MHz to 6 GHz, millimeter-wave frequency bands, e.g., spanning 24.250 GHz to 52.600 GHz, 60 GHz, and/or unlicensed spectrum.

In general, communication using a low frequency can provide large coverage and robust connections but a relatively low data rate, and communication using a high frequency can provide a high data rate because of the large bandwidth of the high frequency. However, high frequency communication suffers from large path loss (thus, providing small coverage). To address this issue, beamforming techniques are employed, where a number of high-gain transmit and/or receive beams are formed for transmitting and receiving wireless signals. Each of the beams may cover only a small region in an angular direction. The beams may be referred to as directional beams. As a result, transmissions performed through the formed beams become highly directional, and alignment of transmit beams and the receive beams is required. Beamforming may be used to mimic omni-directional transmissions or transmissions covering a large area within a range of angles by forming multiple beams at different directions, possibly over different time slots. In high frequency communications, a large number of antenna elements, e.g., an antenna array, is required to bring a sufficient transmit-/receive gain.

A base station may transmit a beamformed signal on one or more downlink (DL) beams of the base station (also referred to as transmit (Tx) beams of the base station). A UE may receive a signal on one or more DL beams of the UE (also referred to as receive (Rx) beams of the UE). A DL beam (i.e., Tx beam) of the base station for transmitting a signal, and a DL beam (i.e., Rx beam) of the UE for receiving the signal form a beam pair or a beam link pair (also referred to as a DL beam pair). Similarly, a UE may transmit a beamformed signal on one or more uplink (UL) beams of the UE (also referred to as Tx beams of the UE). A base station may receive a signal on one or more UL beams of the base station (also referred to as Rx beams of the base station). A UL beam of the UE for transmitting a signal and a UL beam of the base station used for receiving the signal form a beam pair or a beam link pair (also referred to as a UL beam pair). In some instances, the DL beam pair and the UL beam pair may be the same (e.g., may represent the same beam pairs). In other instances, differences may exist between a DL beam pair and a UL beam pair.

Beam management may be performed to manage beamforming procedures on a UE side or a base station, e.g., TRP, side. According to the 3rd Generation Partnership Project (3GPP) technical report (TR) 38.802 V14.2.0 (2017-09), beam management in NR is defined as (see section 6.1.6.1):
a set of L1/L2 procedures to acquire and maintain a set of TRP(s) and/or UE beams that can be used for downlink (DL) and uplink (UL) transmission/reception, which include at least following aspects:

- Beam determination: for TRP(s) or UE to select of its own Tx/Rx beam(s).
- Beam measurement: for TRP(s) or UE to measure characteristics of received beam-formed signals
- Beam reporting: for UE to report information of beam-formed signal(s) based on beam measurement
- Beam sweeping: operation of covering a spatial area, with beams transmitted and/or received during a time interval in a predetermined way.

In NR, beam correspondence is introduced for utilizing uplink-downlink reciprocity of beamformed channels. According to 3GPP 38.802 V14.2.0 (2017-09), Tx/Rx beam correspondence at TRP and UE are defined as follows:

- Tx/Rx beam correspondence at TRP holds if at least one of the following is satisfied:

  - TRP is able to determine a TRP Rx beam for the uplink reception based on UE's downlink measurement on TRP's one or more Tx beams.
  - TRP is able to determine a TRP Tx beam for the downlink transmission based on TRP's uplink measurement on TRP's one or more Rx beams.

- Tx/Rx beam correspondence at UE holds if at least one of the following is satisfied:

  - UE is able to determine a UE Tx beam for the uplink transmission based on UE's downlink measurement on UE's one or more Rx beams.

- UE is able to determine a UE Rx beam for the downlink reception based on TRP's indication based on uplink measurement on UE's one or more Tx beams.
- Capability indication of UE beam correspondence related information to TRP is supported.

The higher the carrier frequency is used in the network, the narrower the beam width of the formed beams is, and the larger the amount of beams is required for providing a desired communication coverage, which is more challenging for beam management, e.g., for beam link pairing. For example, to pair 1024 Tx beams and 256 Rx beams, 262,144 beam pairs need to be scanned. This consumes UEs' resources and creates a heavy burden for UEs. It is desirable to configure UEs with a capability to support beam correspondence in order to reduce overhead of the UEs in beam management.

A UE supports beam correspondence when the UE satisfies a beam correspondence requirement. According to 3GPP 38.101-2, the beam correspondence requirement for power class 3 UEs consists of three components: UE minimum peak EIRP (as defined in Clause 6.2.1.3), UE spherical coverage (as defined in Clause 6.2.1.3), and beam correspondence tolerance (as defined in Clause 6.6.4.2). The beam correspondence requirement is fulfilled if the UE satisfies one of the following conditions, depending on the UE's beam correspondence capability, as defined in TS 38.306:

- If [bit-1], the UE shall meet the minimum peak EIRP requirement according to Table 6.2.1.3-1 and spherical coverage requirement according to Table 6.2.1.3-3 with its autonomously chosen UL beams and without uplink beam sweeping. Such a UE is considered to have met the beam correspondence tolerance requirement.
- If [bit-o], the UE shall meet the minimum peak EIRP requirement according to Table 6.2.1.3-1 and spherical coverage requirement according to Table 6.2.1.3-3 with uplink beam sweeping. Such a UE shall meet the beam correspondence tolerance requirement defined in Clause 6.6.4.2 and shall support uplink beam management, as defined in TS 38.306

Whether a UE supports the beam correspondence may be determined by testing whether the UE satisfies the beam correspondence requirement described above. However, the beam correspondence requirement is only applicable for testing whether a UE supports the beam correspondence within the same component carrier (CC).

A UE may be configured to operate in multiple CCs of different frequency bands. In some cases, a carrier operating in a frequency band (referred to as a second frequency band in the following) may have a companion carrier in another frequency band (referred to as a first frequency band in the following) lower than the second frequency band, in which current beam management works already. Beam forming information obtained for the first frequency band (i.e., lower band) may be used for beamforming in the second frequency band to speed up and simplify beam link scanning process in the second frequency band. This is especially beneficial when the two frequency bands have a large frequency gap, i.e., the difference between frequencies of the two frequency bands is large, e.g., greater than a frequency threshold. Thus, it would be appreciated that the UE also supports beam correspondence between different frequency bands, which is referred to as inter-band beam correspondence in the present disclosure. That is, the UE has inter-band beam correspondence capability.

A UE may be manufactured to support inter-band beam correspondence, however, inter-band beam correspondence may not be guaranteed. This may be caused by various reasons. For example, different antenna panels (or elements) are used for implementing communications in different frequency bands, especially for frequency bands having a large frequency gap, e.g., 15GHz and 60GHz. The panels may be collocated, but may be located in different positions and have different orientations. Other reasons may include large frequency gap of operating frequency bands, manufacturing techniques, manufacturing quality, etc. Thus, it is desirable to provide methodology to test whether a UE supports inter-band beam correspondence, and to determine whether calibration is needed in order for the UE to be able to support inter-band beam correspondence. This will provide another level of assurance of the UE's capability regarding inter-band beam correspondence.

Embodiments of the present disclosure provide methods for determining or testing whether a UE supports inter-band beam correspondence between a first frequency band and a second frequency band, where the second frequency band is higher than the first frequency band. In the embodiments of the present disclosure, a UE supports inter-band beam correspondence if the UE is able to determine one or more UE Tx beams for uplink transmission in the second frequency band based on the UE's measurement on signals received in the first frequency band, such that a UE Tx beam in the second frequency band satisfies the beam correspondence requirement in the second frequency band according to 3GPP 38.101-2. Each of the first frequency band and the second frequency band is a frequency band in which beamforming is utilized for wireless communications in the corresponding frequency band. An example frequency band may include 6GHz, 8 GHz, 28GHZ, 40 GHz, and 60 GHz, etc. In an example, the first frequency band and the second frequency band have a frequency difference that is greater than a threshold, e.g., 30GHz.

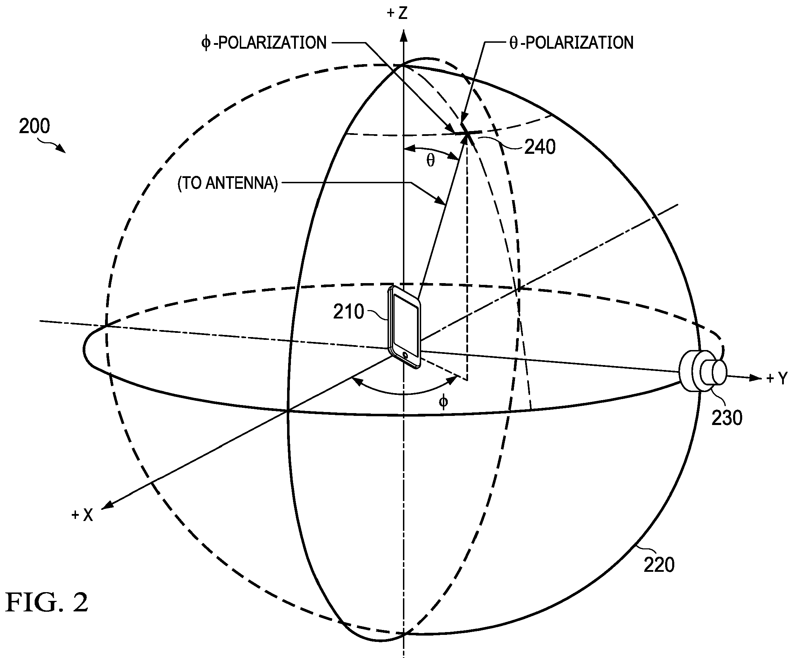

FIG. 2 illustrates a diagram of an embodiment arrangement 200 for testing a UE's capability of supporting inter-band beam correspondence between the first frequency band and the second frequency band. As shown, a device under test (DUT) 210 is located at a centre of a spherical chamber 220 which can be freely rotated along angles θ and φ. The DUT 210 may be any UE that is being tested. A testing device (also referred to as a tester) 230 is located at a fixed position of the chamber 220. As the chamber 220 rotates, the tester 230 is moved to different positions relative to the DUT 210, such as a position 240, thus forming different communication directions with the DUT 210. The tester 230 is equipped with Tx/RX antennas for communicating with the DUT 210. The tester 230 is configured to generate signals for transmission in multiple frequency bands, receive signals from the DUT 210 in multiple frequency bands, and process the received signals to determine whether the DUT 210, i.e., the UE, supports inter-band beam correspondence between different frequency bands. Two frequency bands under test form a frequency band pair. The tester 230 may generate a report indicating the testing result. The report may include information of a frequency band pair, i.e., the first frequency band and the second frequency band, whether the DUT 210 supports inter-band beam correspondence for the frequency band pair, and/or whether calibration is needed for the DUT 210 so that the UE is capable of supporting inter-band beam correspondence between the first frequency band and the second frequency band. The tester 230 may test the DUT 210's capability of supporting inter-band beam correspondence for one or more frequency band pairs. The test for supporting the inter-band beam correspondence between the first frequency band and the second frequency band is performed based on that the UE supports beam correspondence within the same band. That is, the UE has been determined or assumed to support beam correspondence in the first frequency band, and support beam correspondence in the second frequency band, as specified according to 3GPP 38.101-2.

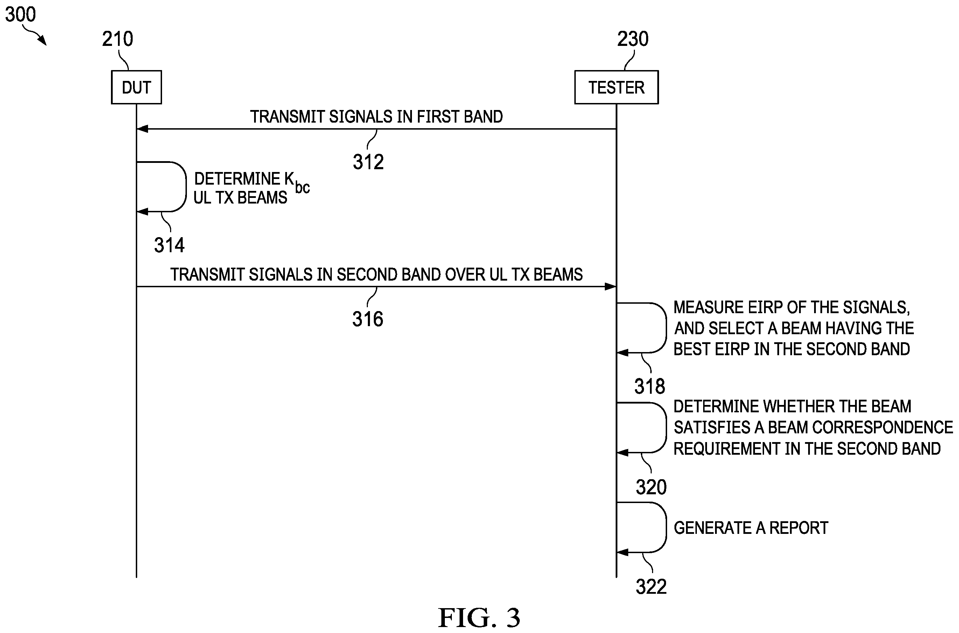

FIG. 3 illustrates a diagram of an embodiment method 300 for testing a UE's capability of supporting inter-band beam correspondence between the first frequency band and the second frequency band, using the testing arrangement 200 illustrated in FIG. 2. In this example, analog beam forming is employed for communications between the DUT 210 and the tester 230 using both the first frequency band and the second frequency band.

As shown, the tester 230 transmits signals (DL) to the DUT 210 in the first frequency band on one or more DL beams (or tester Tx beams) (step 312). The signals transmitted by the tester 230 may serve as a trigger of the test. The signals transmitted by the tester 230 may include a SSB, or a CSI-RS. The signals may be transmitted similarly as being transmitted by a base station to a UE for measurements. The DUT 210 may perform a measurement on the received signals, and adjust one or more receive beams, e.g., beamforming direction, in the first frequency band based on the measurement, e.g., RSRP, etc. The DUT 210 receives the signal transmitted by the tester 230 in the first frequency band, and in response, determines a number (or quantity) K of UL Tx beams (DUT Tx beams) in the second frequency band for uplink transmission (transmission to the tester 230) (step 314). If the DUT 210 supports inter-band beam correspondence, the DUT 210 may determine beamforming directions of the K UL Tx beams in the second frequency band based on the beamforming direction in the first frequency band. That is, the beamforming directions of the K UL Tx beams in the second frequency band are determined based on a DL signal measurement in the first frequency band. Thus, based on the UL transmission on the K UL Tx beams by the DUT 210 in the second frequency band, the tester 230 is able to determine whether the DUT 210 supports inter-band beam correspondence between the first frequency band and the second frequency band. The DUT 210 may determine a maximum $K_{bc}$ UL Tx beams in the second frequency band. That is, $K \le K_{bc}$. In some embodiments, $K_{bc}$ may be determined based on a mapping between the first frequency band and the second frequency band. In one embodiment, the mapping may be provided using a mapping table, as shown by Table 1 below, for example. Each row of Table 1 shows a frequency band pair and a corresponding number $K_{bc}$. For example, the first row shows a frequency band pair {B11, B21}, and that its corresponding maximum number $K_{bc}$ of UL Tx beam is 4. An example of the pair {B11, B21} may be {28 GHz, 60 GHz}. Another example of a frequency band pair {B12, B22} may be {6 GHz, 28 GHz}. By checking Table 1 using the first frequency band and the second frequency band to be tested, $K_{bc}$ is found.

Table 1

| First frequency band | Second frequency band | $K_{bc}$ |
|---|---|---|
| B11 | B21 | 4 |
| B12 | B22 | 4 |
| B13 | B23 | 9 |
| B14 | B24 | 16 |

In some embodiment, the mapping may be provided through a formula. For example, $K_{bc}$ may be calculate by:

$$K_{bc} = \alpha \cdot \max \left\{ \left\lceil \frac{F2\_low}{F1\_low} \right\rceil^2, \left\lceil \frac{F2\_high}{F1\_high} \right\rceil^2 \right\}, \qquad (1)$$

or

$$K_{bc} = \alpha \cdot \left\lceil \frac{F2\_high}{F1\_low} \right\rceil^2, \qquad (2)$$

where F1_low represents the lowest frequency of the first frequency band, F2_low represents the lowest frequency of the second frequency band, F1_high represents the highest frequency of the first frequency band, F2_high represents the highest frequency of the second frequency band, and $\alpha$ is a constant. Other applicable formula may also be used for calculating a maximum number of DUT UL Tx beams.

The DUT 210 may transmit UL signals in the second frequency band by sweeping the K ($\leq K_{bc}$) determined UL beams (step 316). The tester 230 receives the UL signals in the second frequency band on the K UL beams, measures effective isotropic radiation power (EIRP) of the received UL signals on the K UL beams, and finds or selects a UL beam that has the highest EIRP among the K UL beams (step 318). That is, the selected UL beam carries a UL signal that has the highest EIRP measured among the UL signals received. Selecting such a UL beam may be expressed as an mathematical problem of:

$$\text{EIRP}_{\max}^{\text{bc}} = \max\{\text{EIRP}_k\}, \; k = 1, 2, \dots, K$$

In another example, the test 230 may select a beam, among the K UL beams, whose EIRP satisfies a threshold, e.g., greater than or equal to the threshold.

The tester 230 then determines whether the selected beam satisfies the beam correspondence requirement in the second frequency band according to 3GPP 38.101-2 (step 320). In a case where the DUT 210 doesn't support uplink beam management (i.e., a case of bit-1), the selected beam satisfies the beam correspondence requirement for the second frequency band if the selected beam meets the minimum peak EIRP requirement and the spherical coverage requirement without uplink beam sweeping, as specified in 3GPP 38.101-2, clause 6.2.1.3. In a case where the DUT 210 supports uplink beam management (i.e., a case of bit-o), the selected beam satisfies the beam correspondence requirement for the second frequency band if the selected beam meets the minimum peak EIRP requirement, the spherical coverage requirement and the beam correspondence tolerance requirement with uplink beam sweeping, as specified in 3GPP 38.101-2, clause 6.2.1.3.

The selected beam satisfying the beam correspondence requirement in the second frequency band in step 320 indicates that the DUT 210 is able to determine the K UL beams based on the DL signals transmitted by the tester 230 to the DUT 210 in the first frequency band, i.e., based on measurements of the DL signals transmitted by the tester 230, so that the K UL beams are in spatial relation with the DL signals transmitted by the tester 230. Thus, the DUT 210 supports inter-band beam correspondence between the first frequency band and the second frequency band. If the selected beam does not satisfy the beam correspondence requirement for the second frequency band, then the tester 230 determines that the DUT 210 does not support the inter-band beam correspondence.

The tester 230 may generate a report based on the determination made in step 320 (step 322). For example, the report may indicate that the DUT 210 requires calibration for inter-band beam correspondence between the first frequency band and the second frequency band upon the selected beam failing to satisfy the minimum peak EIRP requirement or the spherical coverage requirement in the second frequency band. In another example, the report may indicate that the DUT 210 passes a calibration test for inter-band beam correspondence between the first frequency band and the second frequency band upon the selected beam satisfying the minimum peak EIRP requirement and the spherical coverage requirement in the second frequency band.

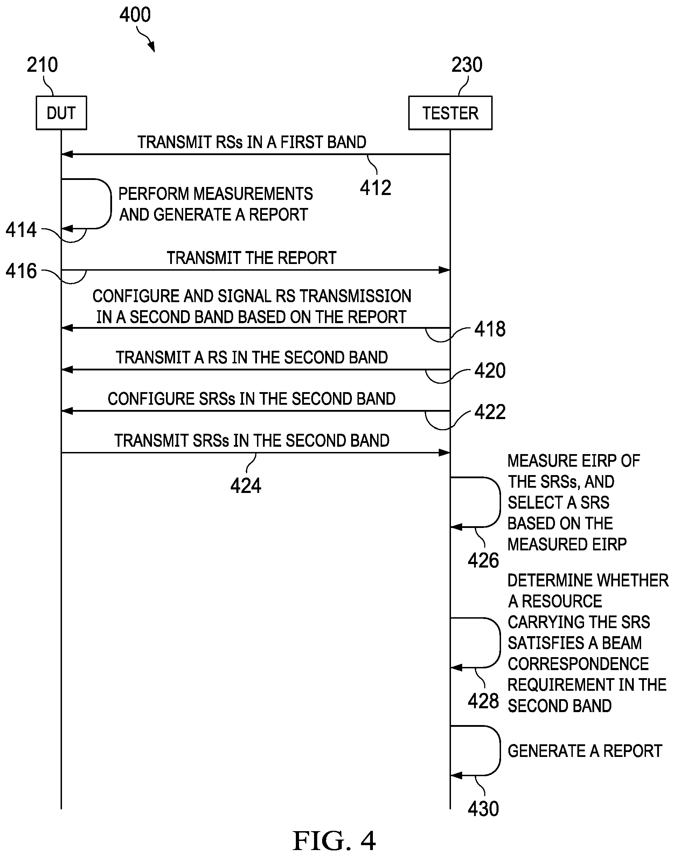

FIG. 4 illustrates a diagram of another embodiment method 400 for testing a UE's capability of supporting inter-band beam correspondence between a first frequency band and a second frequency band higher than the first frequency band, using the testing arrangement 200 illustrated in FIG. 2. As shown, the tester 230 transmits a plurality of reference signals (RSs) in the first frequency band to the DUT 210 (step 412). The RSs transmitted by the tester 230 may serve as a trigger of the test. The RSs may include a synchronization signal block (SSB), or a channel state information-reference signal (CSI-RS). The RSs may be transmitted similarly as being transmitted by a base station to a UE for measurements. The DUT 210 performs measurements based on the received RSs and generates a measurement report (step 414). The DUT 210 then transmits the report to the tester 230 (step 416). The measurements of the DUT 210 may be performed according to conventional methods and configurations as known in the art. For example, the DUT 210 may measure layer 1 received signal received power (L1-RSRP), or layer 1 signal to noise plus interference ratio (L-1 SINR). The measurement report may include the L1-RSRP and/or the L-1 SINR. The measurement report may include CSI-RS resource indicator (CRI) indicating a RS resource carrying a CSI-RS of the plurality of RSs in the first frequency band, or a SSB resource indicator (SSBRI) indicating a RS resource carrying a SSB of the plurality of RSs in the first frequency band. The RS resource, e.g., a tester Tx beam (or DL Tx beam) indicated by the CRI or SSBRI may correspond to the best L-1 RSRP or L-1 SINR among RSs resources carrying the plurality of RSs in the first frequency band, or may correspond to L-1 RSRP or L-1 SINR that satisfies a criterion, e.g., greater than a threshold.

The tester 230 receives the report, and configures a transmission of a RS in the second frequency band based on the report and signals the configuration (step 418). The RS configured may include a CSI-RS. The RS configured in the second frequency band may be quasi-colocated (QCLed) with a RS of the plurality of RSs transmitted in the first frequency band in step 412 in terms of QCL Type-D (i.e., spatial Rx parameter), and the RS of the plurality of RSs transmitted in the first frequency band is carried in a DL resource, e.g., a DL Tx beam, that is reported in the report. For example, the DL resource may be indicated by a CRI or a SSBRI in the report. The DL resource may correspond to L-1 RSRP or L-1 SINR that satisfies a criterion, e.g., being the highest or a greater than a threshold. The tester 230 may configure a RS resource set, e.g., CSI-RS resource set, and/or other information, such as a period for periodically transmitting the configured RS. The tester 230 signals the configuration of the transmission of the RS in the second frequency band to the DUT 210.

The tester 230 then transmits the RS in the second frequency band to the DUT 210 according to the configuration performed in step 418 (step 420). The tester 230 also configures a transmission of UL sounding reference signals (SRSs) for the DUT 210 in the second frequency band, with the UL SRSs configured in spatial relation with the RS transmitted in the second frequency band in step 420 (step 422). The tester 230 may configure resources for the DUT 210 to transmit the UL SRSs. The tester 230 may transmit information to the DUT 210 indicating that the UL SRSs of the DUT 210 has a spatial relation with the downlink RS transmitted to the DUT 210 in step 420. The DUT 210 transmits the UL SRSs in the second frequency band according to the configuration of the tester 230 (step 424). The DUT 210 receives the RS transmitted in the second frequency, and may determine a beamforming direction for the UL SRSs based on the spatial relation configured by the tester 230 between the UL SRSs and the RS received in the second frequency band, and transmit the UL SRSs in the beamforming direction and in the configured resources. If the DUT 210 supports beam correspondence between the first frequency band and the second frequency band, the DUT 210 is able to determine a beamforming direction for receiving the downlink RS in the second frequency transmitted to the DUT 210 in step 420 based on the measurements performed on the RSs received in the first frequency band, and consequently determines the beamforming direction for transmitting the UL SRSs. Thus, based on the UL SRSs transmitted by the DUT 210, the tester 230 is able determine whether the DUT 210 supports inter-band beam correspondence between the first frequency band and the second frequency band. Upon receiving the UL SRSs from the DUT 210, the tester 230 measures EIRP of the UL SRSs received in the second frequency band, and finds or selects a UL SRS from the UL SRSs received in the second frequency band based on the measurement of the EIRP (step 426). The UL SRS may be selected based on an EIRP criterion. For example, the UL SRS may be selected when the UL SRS has the highest EIRP among the UL SRSs. In another example, the UL SRS may be selected when the UL SRS has an EIRP greater than a threshold. The selected UL SRS is carried on a UL resource, e.g., a UL Tx beam, of the DUT 210.

The tester 230 then determines whether the UL resource carrying the selected UL SRS, e.g., the UL Tx beam, satisfies the beam correspondence requirement in the second frequency band according to 3GPP 38.101-2 (step 428). In a case where the DUT 210 doesn't support uplink beam management (i.e., a case of bit-1), the UL Tx beam satisfies the beam correspondence requirement if the UL Tx beam meets the minimum peak EIRP requirement and the spherical coverage requirement without uplink beam sweeping, as specified in 3GPP 38.101-2. In a case where the DUT 210 supports uplink beam management (i.e., a case of bit-o), the UL Tx beam satisfies the beam correspondence requirement if the UL Tx beam meets the minimum peak EIRP requirement, the spherical coverage requirement and the beam correspondence tolerance requirement with uplink beam sweeping, as specified in 3GPP 38.101-2.

The UL resource, e.g., the UL Tx beam, satisfying the beam correspondence requirement in the second frequency band in step 428 indicates that the DUT 210 supports inter-band beam correspondence between the first frequency band and the second frequency band. If the UL resource, e.g., the UL Tx beam, does not satisfy the beam correspondence requirement in the second frequency band in step 428, then the tester 230 determines that the DUT 210 does not support inter-band beam correspondence between the first frequency band and the second frequency band.

The tester 230 may generate a report based on the determination made in step 428. For example, the report may indicate that the DUT 210 requires calibration for inter-band beam correspondence between the first frequency band and the second frequency band upon the UL resource failing to satisfy the minimum peak EIRP requirement or the spherical coverage requirement in the second frequency band. In another example, the report may indicate that the DUT 210 passes a calibration test for inter-band beam correspondence between the first frequency band and the second frequency band upon the UL resource satisfying the minimum peak EIRP requirement and the spherical coverage requirement in the second frequency band.

The embodiment methods for testing inter-band beam correspondence may be viewed as testing a UE beam directional mapping between different bands and different antenna panels of the UE. The panels may have different positions and orientations in the UE, which may adversely affect the UE's capability to support inter-band beam correspondence. Calibration may be needed to adjust panels, e.g., a panel position and/or orientation, used for communications in different bands in order to calibrate the UE's inter-band beam correspondence capability. In the embodiment methods, the tester communicates signals with the DUT in different frequency bands, where the beam width of the different frequency bands may have large differences. A number of UL Tx beams of the DUT may be dependent on frequencies of the frequency band pair, as illustrates with respect to FIG. 3. The embodiment methods determining the UE's inter-band beam correspondence capability require that a UL Tx beam of the DUT selected by the tester satisfies the same band beam correspondence requirement of RAN 4.

The embodiment methods are provided to test a UE's capability of supporting inter-band beam correspondence between two different frequency bands. The test is helpful to ensure that a UE has such capability, which facilitates the UE to perform beam management, such as perform fast beam sweeping for initial beam search and new candidate beam search.

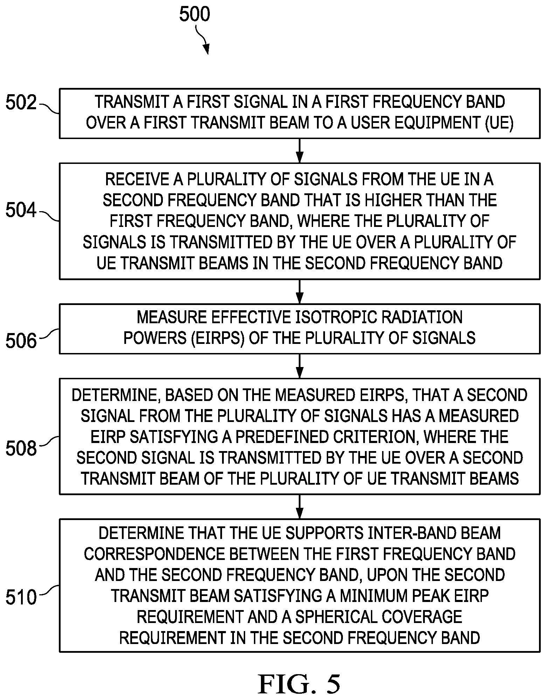

FIG. 5 illustrates a diagram of an embodiment method 500 for testing a UE's capability of supporting inter-band beam correspondence between a first frequency band and a second frequency band. The method 500 may be performed by a tester, e.g., the tester 230, configured to perform such a test. As shown, at step 502, the tester transmits a first signal in a first frequency band over a first transmit beam to a user equipment (UE). At step 504, the tester receives a plurality of signals from the UE in a second frequency band that is higher than the first frequency band, where the plurality of signals is transmitted by the UE over a plurality of UE transmit beams in the second frequency band. The second frequency band is higher than the first frequency band. At step 506, the tester measures effective isotropic radiation powers (EIRPs) of the plurality of signals. At step 508, the tester determines, based on the measured EIRPs, that a second signal from the plurality of signals has a measured EIRP satisfying a predefined criterion, where the second signal is transmitted by the UE over a second transmit beam of the plurality of UE transmit beams. At step 510, the tester determines that the UE supports inter-band beam correspondence between the first frequency band and the second frequency band, upon the second transmit beam satisfying a minimum peak EIRP requirement and a spherical coverage requirement in the second frequency band.

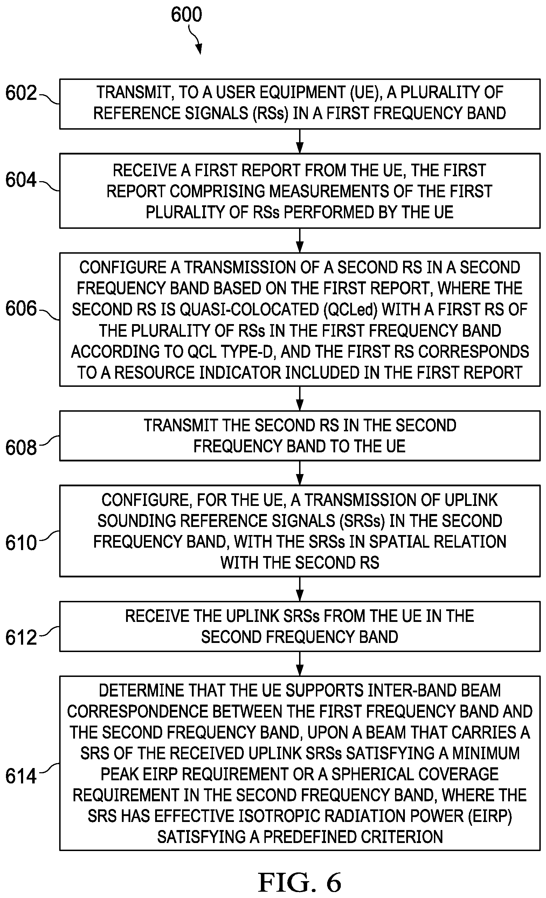

FIG. 6 illustrates a diagram of an embodiment method 600 for testing a UE's capability of supporting inter-band beam correspondence between a first frequency band and a second frequency band. The method 600 may be performed by a tester, e.g., the tester 230, configured to perform such a test. As shown, at step 602, the tester transmits, to a user equipment (UE), a plurality of reference signals (RSs) in a first frequency band. At step 604, the tester receives a first report from the UE, the first report comprising measurements of the first plurality of RSs performed by the UE. At step 606, the tester configures a transmission of a second RS in a second frequency band based on the first report, where the second RS is quasi-colocated (QCLed) with a first RS of the plurality of RSs in the first frequency band according to QCL Type-D, and the first RS corresponds to a resource indicator included in the first report. The second frequency band is higher than the first frequency band. At step 608, the tester transmits the second RS in the second frequency band to the UE. At step 610, the tester configures, for the UE, a transmission of uplink sounding reference signals (SRSs) in the second frequency band, with the SRSs in spatial relation with the second RS. At step 612, the tester receives the uplink SRSs from the UE in the second frequency band. At step 614, the tester determines that the UE supports inter-band beam correspondence between the first frequency band and the second frequency band, upon a beam that carries a SRS of the received uplink SRSs satisfying a minimum peak EIRP requirement or a spherical coverage requirement in the second frequency band, where the SRS has effective isotropic radiation power (EIRP) satisfying a predefined criterion.

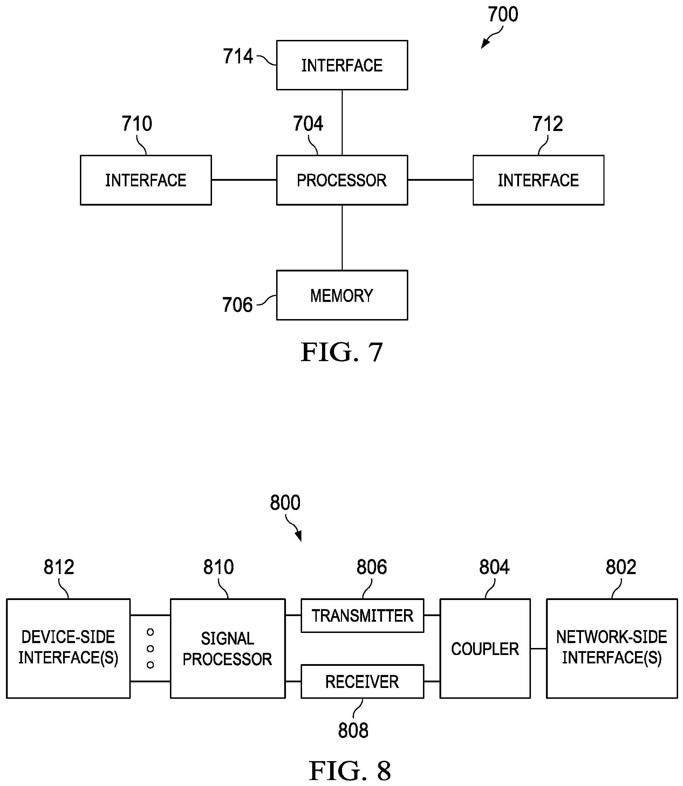

FIG. 7 illustrates a block diagram of an embodiment processing system 700 for performing methods described herein, which may be installed in a host device. As shown, the processing system 700 includes a processor 704, a memory 706, and interfaces 710-714, which may (or may not) be arranged as shown in FIG. 7. The processor 704 may be any component or collection of components adapted to perform computations and/or other processing related tasks, and the memory 706 may be any component or collection of components adapted to store programming and/or instructions for execution by the processor 704. In an embodiment, the memory 706 includes a non-transitory computer readable medium. The interfaces 710, 712, 714 may be any component or collection of components that allow the processing system 700 to communicate with other devices/components and/or a user. For example, one or more of the interfaces 710, 712, 714 may be adapted to communicate data, control, or management messages from the processor 704 to applications installed on the host device and/or a remote device. As another example, one or more of the interfaces 710, 712, 714 may be adapted to allow a user or user device (e.g., personal computer (PC), etc.) to interact/communicate with the processing system 700. The processing system 700 may include additional components not depicted in FIG. 6, such as long term storage (e.g., non-volatile memory, etc.).

In some embodiments, the processing system 700 is included in a network device that is accessing, or part otherwise of, a telecommunications network. In one example, the processing system 700 is in a network-side device in a wireless or wireline telecommunications network, such as a base station, a relay station, a scheduler, a controller, a gateway, a router, an applications server, or any other device in the telecommunications network. In other embodiments, the processing system 700 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 710, 712, 714 connects the processing system 700 to a transceiver adapted to transmit and receive signaling over the telecommunications network. FIG. 8 illustrates a block diagram of a transceiver 800 adapted to transmit and receive signaling over a telecommunications network. The transceiver 800 may be installed in a host device. As shown, the transceiver 800 comprises a network-side interface 802, a coupler 804, a transmitter 806, a receiver 808, a signal processor 810, and a device-side interface 812. The network-side interface 802 may include any component or collection of components adapted to transmit or receive signaling over a wireless or wireline telecommunications network. The coupler 804 may include any component or collection of components adapted to facilitate bidirectional communication over the network-side interface 802. The transmitter 806 may include any component or collection of components (e.g., up-converter, power amplifier, etc.) adapted to convert a baseband signal into a modulated carrier signal suitable for transmission over the network-side interface 802. The receiver 808 may include any component or collection of components (e.g., down-converter, low noise amplifier, etc.) adapted to convert a carrier signal received over the network-side interface 802 into a baseband signal. The signal processor 810 may include any component or collection of components adapted to convert a baseband signal into a data signal suitable for communication over the device-side interface(s) 812, or vice-versa. The device-side interface(s) 812 may include any component or collection of components adapted to communicate data-signals between the signal processor 810 and components within the host device (e.g., the processing system 700, local area network (LAN) ports, etc.).

The transceiver 800 may transmit and receive signaling over any type of communications medium. In some embodiments, the transceiver 800 transmits and receives signaling over a wireless medium. For example, the transceiver 800 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 802 comprises one or more antenna/radiating elements. For example, the network-side interface 802 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 800 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

While this disclosure has been described with reference to illustrative embodiments, this description is not intended to be construed in a limiting sense. Various modifications and combinations of the illustrative embodiments, as well as other embodiments of the disclosure, will be apparent to persons skilled in the art upon reference to the description. It is therefore intended that the appended claims encompass any such modifications or embodiments.

**Claims**

1. A method (500) comprising:

   transmitting (502), by a device, a first signal in a first frequency band over a first transmit beam to a user equipment (UE);
   receiving (504), by the device, a plurality of signals from the UE in a second frequency band that is higher than the first frequency band, the plurality of signals transmitted by the UE over a plurality of UE transmit beams in the second frequency band;
   measuring (506), by the device effective isotropic radiation powers (EIRPs) of the plurality of signals;
   determining (508), by the device, based on the measured EIRPs, that a second signal from the plurality of signals has a measured EIRP satisfying a predefined criterion, the second signal being transmitted by the UE over a second transmit beam of the plurality of UE transmit beams; and
   determining (510) , by the device, that the UE supports inter-band beam correspondence between the first frequency band and the second frequency band, upon the second transmit beam satisfying a minimum peak EIRP requirement and a spherical coverage requirement in the second frequency band.

2. The method of claim 1, wherein a quantity of the plurality of UE transmit beams is related to the first frequency band and the second frequency band.

3. The method of claim 2, wherein the quantity is based on a predefined mapping between the first frequency band and the second frequency band.

4. The method of claim 2, wherein the quantity is based on a formula relating to the first frequency band and the second frequency band.

5. The method of claim 4, wherein the quantity satisfies:

$$K_{bc} = \alpha \cdot \max\left\{\left\lceil\frac{F2\_low}{F1\_low}\right\rceil^2, \left\lceil\frac{F2\_high}{F1\_high}\right\rceil^2\right\},$$

where $K_{bc}$ is the quantity of the plurality of UE transmit beams, F1_low represents a lowest frequency of the first frequency band, F2_low represents a lowest frequency of the second frequency band, F1_high represents a highest frequency of the first frequency band, F2_high represents a highest frequency of the second frequency band, and $\alpha$ is a constant.

6. The method of claim 4, wherein the quantity satisfies:

$$K_{bc} = \alpha \cdot \left\lceil\frac{F2\_high}{F1\_low}\right\rceil^2,$$

where $K_{bc}$ is the quantity of the plurality of UE transmit beams, F1_low represents the lowest frequency of the first frequency band, F2_high represents the highest frequency of the second frequency band, and $\alpha$ is a constant.

7. A method (600) comprising:

transmitting (602), by a device to a user equipment (UE), a plurality of reference signals (RSs) in a first frequency band;
receiving (604), by the device, a first report from the UE, the first report comprising measurements of the first plurality of RSs performed by the UE;
configuring (606), by the device, a transmission of a second RS in a second frequency band based on the first report, the second RS being quasi-colocated (QCLed) with a first RS of the plurality of RSs in the first frequency band according to QCL Type-D, the first RS corresponding to a resource indicator that is included in the first report, and the second frequency band being higher than the first frequency band, wherein the QCL Type-D refers to a spatial receiving parameter;
transmitting (608), by the device, the second RS in the second frequency band to the UE;
configuring (610), by the device, for the UE, a transmission of uplink sounding reference signals (SRSs) in the second frequency band, the SRSs in spatial relation with the second RS;
receiving (612), by the device, the uplink SRSs from the UE in the second frequency band; and
determining (614), by the device, that the UE supports inter-band beam correspondence between the first frequency band and the second frequency band, upon a beam that carries a SRS of the received uplink SRSs satisfying a minimum peak EIRP requirement or a spherical coverage requirement in the second frequency band, the SRS having effective isotropic radiation power (EIRP) satisfying a predefined criterion.

8. The method of claim 7, wherein the plurality of RSs comprises a synchronization signal block (SSB).

9. The method of claim 7, wherein the plurality of RSs comprises a channel state information-reference signal (CSI-RS).

10. The method of any one of claims 7-9, wherein the first frequency band and the second frequency band have a frequency difference that is greater than a threshold.

11. The method of any one of claims 7-10, wherein the first report comprises a layer 1 received signal received power (L1-RSRP) or layer 1 signal to noise plus interference ration (L-1 SINR).

12. The method of any one of claims 7-11, wherein the first report comprises a CSI-RS resource indicator (CRI) and/or SSB resource indicator (SSBRI).

13. The method of any one of claims 7-12, further comprising:
generating, by the device, a report indicating that the UE requires calibration for supporting inter-band beam correspondence upon beam failing to satisfy the minimum peak EIRP requirement or the spherical coverage requirement in the second frequency band.

14. An apparatus comprising:

a non-transitory memory storage comprising instructions; and

one or more processors in communication with the memory storage, wherein the instructions, when executed by the one or more processors, cause the apparatus to perform the method according to any one of claims 1 to 6 or any one of claims 7 to 13.

15. A non-transitory computer-readable media storing computer instructions, that when executed by one or more processors, cause an apparatus to perform the method according to any one of claims 1 to 6 or any one of claims 7 to 13.

**Patentansprüche**

1. Verfahren (500), das umfasst:

   Senden (502), durch eine Vorrichtung, eines ersten Signals in einem ersten Frequenzband über einen ersten Sendestrahl an eine Benutzerausrüstung (UE);
   Empfangen (504), durch die Vorrichtung, einer Vielzahl von Signalen von der UE in einem zweiten Frequenzband, das höher als das erste Frequenzband ist, wobei die Vielzahl von Signalen durch die UE über eine Vielzahl von UE-Sendestrahlen in dem zweiten Frequenzband gesendet wird;
   Messen (506), durch die Vorrichtung, der äquivalenten isotropen Strahlungsleistungen (EIRPs) der Vielzahl von Signalen;
   Bestimmen (508), durch die Vorrichtung,
   basierend auf den gemessenen EIRPs, dass ein zweites Signal aus der Vielzahl von Signalen eine gemessene EIRP aufweist, die ein vordefiniertes Kriterium erfüllt,
   wobei das zweite Signal durch die UE über einen zweiten Sendestrahl der Vielzahl von UE-Sendestrahlen gesendet wird; und
   Bestimmen (510), durch die Vorrichtung, dass die UE eine Interbandstrahlkorrespondenz zwischen dem ersten Frequenzband und dem zweiten Frequenzband unterstützt, wenn der zweite Sendestrahl eine Mindest-Spitzen-EIRP-Anforderung und eine Anforderung für die sphärische Abdeckung in dem zweiten Frequenzband erfüllt.

2. Verfahren nach Anspruch 1, wobei eine Größe der Vielzahl von UE-Sendestrahlen sich auf das erste Frequenzband und das zweite Frequenzband bezieht.

3. Verfahren nach Anspruch 2, wobei die Größe auf einer vordefinierten Zuordnung zwischen dem ersten Frequenzband und dem zweiten Frequenzband basiert.

4. Verfahren nach Anspruch 2, wobei die Größe auf einer Formel basiert, die sich auf das erste Frequenzband und das zweite Frequenzband bezieht.

5. Verfahren nach Anspruch 4, wobei die Größe erfüllt:

$$K_{bc} = \alpha \cdot \max\left\{ \left\lceil \frac{F2\_niedrig}{F1\_niedrig} \right\rceil^2 , \left\lceil \frac{F2\_hoch}{F1\_hoch} \right\rceil^2 \right\},$$

   wobei $K_{bc}$ die Größe der Vielzahl von UE-Sendestrahlen ist, F1_niedrig eine niedrigste Frequenz des ersten Frequenzbands darstellt, F2_niedrig eine niedrigste Frequenz des zweiten Frequenzbands darstellt, F1_hoch eine höchste Frequenz des ersten Frequenzbands darstellt, F2_hoch eine höchste Frequenz des zweiten Frequenzbands darstellt und $\alpha$ eine Konstante ist.

6. Verfahren nach Anspruch 4, wobei die Größe erfüllt:

$$K_{bc} = \alpha \cdot \left\lceil \frac{F2\_hoch}{F1\_niedrig} \right\rceil^2,$$

   wobei $K_{bc}$ die Größe der Vielzahl von UE-Sendestrahlen ist, F1_niedrig die niedrigste Frequenz des ersten Frequenzbands darstellt, F2_hoch die höchste Frequenz des zweiten Frequenzbands darstellt und $\alpha$ eine Konstante ist.

7. Verfahren (600), das umfasst:

Senden (602), durch eine Vorrichtung, an eine Benutzerausrüstung (UE), einer Vielzahl von Referenzsignalen (RSs) in einem ersten Frequenzband;

Empfangen (604), durch die Vorrichtung, eines ersten Berichts von der UE, wobei der erste Bericht Messungen der ersten Vielzahl von RSs, die durch die UE durchgeführt werden, umfasst;

Konfigurieren (606), durch die Vorrichtung, eines Sendens eines zweiten RS in einem zweiten Frequenzband basierend auf dem ersten Bericht, wobei das zweite RS gemäß QCL-Art D mit einem ersten RS der Vielzahl von RSs in dem ersten Frequenzband quasi-kolokalisiert (QCLed) ist, das erste RS einem Ressourcenindikator entspricht, der in dem ersten Bericht eingeschlossen ist, und das zweite Frequenzband höher als das erste Frequenzband ist, wobei der QCL-Art D sich auf einen räumlichen Empfangsparameter bezieht;

Senden (608), durch die Vorrichtung, des zweiten RS in dem zweiten Frequenzband an die UE;

Konfigurieren (610), durch die Vorrichtung, für die UE, eines Sendens von Uplink-Sondierungsreferenzsignalen (SRSs) in dem zweiten Frequenzband, wobei die SRSs in räumlicher Beziehung zu dem zweiten RS stehen;

Empfangen (612), durch die Vorrichtung, der Uplink-SRSs von der UE in dem zweiten Frequenzband; und

Bestimmen (614), durch die Vorrichtung, dass die UE die Interbandstrahlkorrespondenz zwischen dem ersten Frequenzband und dem zweiten Frequenzband unterstützt, wenn ein Strahl, der ein SRS der empfangenen Uplink-SRSs trägt, eine Mindest-Spitzen-EIRP-Anforderung oder eine Anforderung für die sphärische Abdeckung in dem zweiten Frequenzband erfüllt, wobei das SRS eine äquivalente isotrope Strahlungsleistung (EIRP) aufweist, die ein vordefiniertes Kriterium erfüllt.

8. Verfahren nach Anspruch 7, wobei die Vielzahl von RSs einen Synchronisationssignalblock (SSB) umfasst.

9. Verfahren nach Anspruch 7, wobei die Vielzahl von RSs ein Kanalzustandsinformationsreferenzsignal (CSI-RS) umfasst.

10. Verfahren nach einem der Ansprüche 7 bis 9, wobei das erste Frequenzband und das zweite Frequenzband einen Frequenzunterschied aufweisen, der größer als ein Schwellenwert ist.

11. Verfahren nach einem der Ansprüche 7 bis 10, wobei der erste Bericht eine Schicht-1-Empfangssignal-Empfangsleistung (L1-RSRF) oder Schicht-1-Signal-Rausch-plus-Interferenzverhältnis (L-1 SINR) umfasst.

12. Verfahren nach einem der Ansprüche 7 bis 11, wobei der erste Bericht einen CSI-RS-Ressourcenindikator (CRI) und/oder SSB-Ressourcenindikator (SSBRI) umfasst.

13. Verfahren nach einem der Ansprüche 7 bis 12, das ferner umfasst:
Erzeugen, durch die Vorrichtung, eines Berichts, der angibt, dass die UE eine Kalibrierung zum Unterstützen der Interbandstrahlkorrespondenz benötigt, wenn der Strahl die Mindest-Spitzen-EIRP-Anforderung oder die Anforderung für die sphärische Abdeckung in dem zweiten Frequenzband nicht erfüllt.

14. Einrichtung, die umfasst:

einen nicht flüchtigen Speicher, der Anweisungen umfasst; und

einen oder mehrere Prozessoren in Kommunikation mit dem Speicher, wobei die Anweisungen, wenn sie durch den einen oder die mehreren Prozessoren ausgeführt werden, die Einrichtung veranlassen, das Verfahren nach einem der Ansprüche 1 bis 6 oder einem der Ansprüche 7 bis 13 durchführt.

15. Nicht flüchtiges computerlesbares Medium, das Computeranweisungen speichert, die, wenn sie durch einen oder mehrere Prozessoren ausgeführt werden, eine Einrichtung veranlassen, das Verfahren nach einem der Ansprüche 1 bis 6 oder einem der Ansprüche 7 bis 13 durchzuführen.

**Revendications**

1. Procédé (500) comprenant :

l'émission (502), par un dispositif, d'un premier signal dans une première bande de fréquences sur un premier faisceau d'émission vers un équipement utilisateur (UE) ;

la réception (504), par le dispositif, d'une pluralité de signaux provenant de l'UE dans une seconde bande de fréquences supérieure à la première bande de fréquences, la pluralité de signaux émis par l'UE sur une pluralité de faisceaux d'émission de l'UE dans la seconde bande de fréquences ;

la mesure (506), par le dispositif, des puissances de rayonnement isotrope effectives (EIRP) de la pluralité de signaux ;

la détermination (508), par le dispositif,

sur la base des EIRP mesurées, qu'un second signal de la pluralité de signaux a une EIRP mesurée satisfaisant à un critère prédéfini, le second signal étant transmis par l'UE sur un second faisceau d'émission de la pluralité de faisceaux d'émission de l'UE ;

et

la détermination (510), par le dispositif, que l'UE prend en charge la correspondance de faisceau interbande entre la première bande de fréquences et la seconde bande de fréquences, lorsque le second faisceau d'émission satisfait à une exigence de EIRP de crête minimale et à une exigence de couverture sphérique dans la seconde bande de fréquences.

2. Procédé selon la revendication 1, dans lequel une quantité de la pluralité de faisceaux d'émission de l'UE est liée à la première bande de fréquences et la seconde bande de fréquences.

3. Procédé selon la revendication 2, dans lequel la quantité est basée sur une correspondance prédéfinie entre la première bande de fréquences et la seconde bande de fréquences.

4. Procédé selon la revendication 2, dans lequel la quantité est basée sur une formule relative à la première bande de fréquence et la seconde bande de fréquence.

5. Procédé selon la revendication 4, dans lequel la quantité satisfait ce qui suit :

$$K_{bc} = \alpha \cdot \max\left\{\left[\frac{F2\_basse}{F1\_basse}\right]^2, \left[\frac{F2\_élevée}{F1\_élevée}\right]^2\right\},$$

$K_b$ est la quantité de la pluralité de faisceaux d'émission de l'UE, F1_basse représente une fréquence la plus basse de la première bande de fréquences, F2_basse représente une fréquence la plus basse de la seconde bande de fréquences, F1_élevée représente une fréquence la plus élevée de la première bande de fréquences, F2_élevée représente une fréquence la plus élevée de la seconde bande de fréquences, et $\alpha$ est une constante.

6. Procédé selon la revendication 4, dans lequel la quantité satisfait ce qui suit :

$$K_{bc} = \alpha \cdot \left[\frac{F2\_élevée}{F1\_basse}\right]^2,$$

$K_{bc}$ est la quantité de la pluralité de faisceaux d'émission de l'UE, F1_basse représente la fréquence la plus basse de la première bande de fréquences, F2_élevée représente la fréquence la plus élevée de la seconde bande de fréquences, et $\alpha$ est une constante.

7. Procédé (600) comprenant :

l'émission (602), par un dispositif à un équipement utilisateur (UE), d'une pluralité de signaux de référence (RS) dans une première bande de fréquences ;
la réception (604), par le dispositif, d'un premier rapport de l'UE, le premier rapport comprenant des mesures de la première pluralité de RS effectuées par l'UE ;
la configuration (606), par le dispositif, d'une émission de seconds RS dans une seconde bande de fréquences sur la base du premier rapport, les seconds RS étant quasi-colocalisés (QCL) avec des premiers RS de la pluralité de RS dans la première bande de fréquences selon le type QCL-D, les premiers RS correspondant à un indicateur de ressource qui est inclus dans le premier rapport, et la seconde bande de fréquences étant plus élevée que la première bande de fréquences, dans lequel le type QCL-D se réfère à un paramètre de réception spatiale ;
l'émission (608), par le dispositif, de seconds RS dans la seconde bande de fréquences à l'UE ;
la configuration (610), par le dispositif, pour l'UE, d'une émission de signaux de référence sonores de liaison montante (SRS) dans la seconde bande de fréquences, les SRS étant en relation spatiale avec les seconds RS ;

la réception (612), par le dispositif, des SRS de liaison montante de l'UE dans la seconde bande de fréquences ; et
la détermination (614), par le dispositif, que l'UE prend en charge une correspondance de faisceau interbande entre la première bande de fréquences et la seconde bande de fréquences, sur un faisceau qui transporte un SRS des SRS de liaison montante reçus satisfaisant à une exigence EIRP de crête minimale ou à une exigence de couverture sphérique dans la seconde bande de fréquences, le SRS ayant une puissance de rayonnement isotrope effective (EIRP) satisfaisant à un critère prédéfini.

8. Procédé selon la revendication 7, dans lequel la pluralité des RS comprend un bloc de signaux de synchronisation (SSB).

9. Procédé selon la revendication 7, dans lequel la pluralité de RS comprend un signal de référence d'informations d'état de canal (CSI-RS).

10. Procédé selon l'une quelconque des revendications 7 à 9, dans lequel la première bande de fréquences et la seconde bande de fréquences ont une différence de fréquence supérieure à un seuil.

11. Procédé selon l'une quelconque des revendications 7 à 10, dans lequel le premier rapport comprend une puissance reçue de signal reçu de la couche 1 (L1-RSRF) ou le rapport signal/bruit plus interférence de la couche 1 (L-1 SINR).

12. Procédé selon l'une quelconque des revendications 7 à 11, dans lequel le premier rapport comprend un indicateur de ressource CSI-RS (CRI) et/ou un indicateur de ressources SSB (SSBRI).

13. Procédé selon l'une quelconque des revendications 7 à 12, comprenant en outre :
la génération, par le dispositif, d'un rapport indiquant que l'UE a besoin d'un étalonnage pour prendre en charge la correspondance interbande de faisceaux lorsque le faisceau ne satisfait pas à l'exigence EIRP de crête minimale ou à l'exigence de couverture sphérique dans la seconde bande de fréquences.

14. Appareil, comprenant :

un stockage de mémoire non transitoire comprenant des instructions ; et
un ou des processeurs en communication avec le stockage mémoire, dans lequel les instructions, lorsqu'elles sont exécutées par le ou les processeurs, amènent l'appareil à effectuer le procédé selon l'une quelconque des revendications 1 à 6 ou l'une quelconque des revendications 7 à 13.

15. Support non transitoire lisible par ordinateur stockant des instructions informatiques qui, lorsqu'elles sont exécutées par un ou des processeurs, amènent un appareil à exécuter le procédé selon l'une quelconque des revendications 1 à 6 ou l'une quelconque des revendications 7 à 13.

FIG. 2

EP 4 183 056 B1

300

210

DUT

230

TESTER

TRANSMIT SIGNALS IN FIRST BAND

312

DETERMINE $K_{bc}$ UL TX BEAMS

314

TRANSMIT SIGNALS IN SECOND BAND OVER UL TX BEAMS

316

MEASURE EIRP OF THE SIGNALS, AND SELECT A BEAM HAVING THE BEST EIRP IN THE SECOND BAND

318

DETERMINE WHETHER THE BEAM SATISFIES A BEAM CORRESPONDENCE REQUIREMENT IN THE SECOND BAND

320

GENERATE A REPORT

322

FIG. 3

FIG. 4

500

502 — TRANSMIT A FIRST SIGNAL IN A FIRST FREQUENCY BAND OVER A FIRST TRANSMIT BEAM TO A USER EQUIPMENT (UE)

504 — RECEIVE A PLURALITY OF SIGNALS FROM THE UE IN A SECOND FREQUENCY BAND THAT IS HIGHER THAN THE FIRST FREQUENCY BAND, WHERE THE PLURALITY OF SIGNALS IS TRANSMITTED BY THE UE OVER A PLURALITY OF UE TRANSMIT BEAMS IN THE SECOND FREQUENCY BAND

506 — MEASURE EFFECTIVE ISOTROPIC RADIATION POWERS (EIRPS) OF THE PLURALITY OF SIGNALS

508 — DETERMINE, BASED ON THE MEASURED EIRPS, THAT A SECOND SIGNAL FROM THE PLURALITY OF SIGNALS HAS A MEASURED EIRP SATISFYING A PREDEFINED CRITERION, WHERE THE SECOND SIGNAL IS TRANSMITTED BY THE UE OVER A SECOND TRANSMIT BEAM OF THE PLURALITY OF UE TRANSMIT BEAMS

510 — DETERMINE THAT THE UE SUPPORTS INTER-BAND BEAM CORRESPONDENCE BETWEEN THE FIRST FREQUENCY BAND AND THE SECOND FREQUENCY BAND, UPON THE SECOND TRANSMIT BEAM SATISFYING A MINIMUM PEAK EIRP REQUIREMENT AND A SPHERICAL COVERAGE REQUIREMENT IN THE SECOND FREQUENCY BAND

FIG. 5

600

| 602 | TRANSMIT, TO A USER EQUIPMENT (UE), A PLURALITY OF REFERENCE SIGNALS (RSs) IN A FIRST FREQUENCY BAND |

| 604 | RECEIVE A FIRST REPORT FROM THE UE, THE FIRST REPORT COMPRISING MEASUREMENTS OF THE FIRST PLURALITY OF RSs PERFORMED BY THE UE |

| 606 | CONFIGURE A TRANSMISSION OF A SECOND RS IN A SECOND FREQUENCY BAND BASED ON THE FIRST REPORT, WHERE THE SECOND RS IS QUASI-COLOCATED (QCLed) WITH A FIRST RS OF THE PLURALITY OF RSs IN THE FIRST FREQUENCY BAND ACCORDING TO QCL TYPE-D, AND THE FIRST RS CORRESPONDS TO A RESOURCE INDICATOR INCLUDED IN THE FIRST REPORT |

| 608 | TRANSMIT THE SECOND RS IN THE SECOND FREQUENCY BAND TO THE UE |

| 610 | CONFIGURE, FOR THE UE, A TRANSMISSION OF UPLINK SOUNDING REFERENCE SIGNALS (SRSs) IN THE SECOND FREQUENCY BAND, WITH THE SRSs IN SPATIAL RELATION WITH THE SECOND RS |

| 612 | RECEIVE THE UPLINK SRSs FROM THE UE IN THE SECOND FREQUENCY BAND |

| 614 | DETERMINE THAT THE UE SUPPORTS INTER-BAND BEAM CORRESPONDENCE BETWEEN THE FIRST FREQUENCY BAND AND THE SECOND FREQUENCY BAND, UPON A BEAM THAT CARRIES A SRS OF THE RECEIVED UPLINK SRSs SATISFYING A MINIMUM PEAK EIRP REQUIREMENT OR A SPHERICAL COVERAGE REQUIREMENT IN THE SECOND FREQUENCY BAND, WHERE THE SRS HAS EFFECTIVE ISOTROPIC RADIATION POWER (EIRP) SATISFYING A PREDEFINED CRITERION |

FIG. 6

700

714 — INTERFACE

710      704      712

INTERFACE    PROCESSOR    INTERFACE

MEMORY

706 —

## FIG. 7

800

812    810    806    804    802

DEVICE-SIDE INTERFACE(S)   ○○○   SIGNAL PROCESSOR    TRANSMITTER    COUPLER    NETWORK-SIDE INTERFACE(S)

RECEIVER

808

## FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3rd Generation Partnership Project (3GPP) technical report (TR) 38.802*, September 2017

- *3GPP 38.802*, September 2017